# EUROPEAN PATENT APPLICATION

(11) **EP 4 543 053 A1**
(43) Date of publication of application: **23.04.2025**
(21) Application number: 23823067.6
(22) Date of filing: 12.06.2023
(51) Int. Cl.: H04W 4/06, H04W 72/12

(54) **INFORMATION TRANSMISSION METHOD, SCHEDULING METHOD, TERMINAL AND NETWORK-SIDE DEVICE**

(30) Priority: 14.06.2022 CN 202210671380
(71) Applicant: Datang Mobile Communications Equipment Co., Ltd., Beijing 100085 (CN)
(72) Inventor: ZENG, Erlin, Beijing 100085 (CN); ZHOU, Rui, Beijing 100085 (CN); LIU, Aijuan, Beijing 100085 (CN); LIANG, Jing, Beijing 100085 (CN)
(74) Representative: Maiwald GmbH
(86) International application number: PCT/CN2023/099623
(87) International publication number: WO 2023/241499

(57) **Abstract**

An information transmission method, a scheduling method, a terminal and a network-side device are provided. The information transmission method includes: determining, by a terminal, related information of a first broadcast service; and sending, by the terminal, the related information of the first broadcast service to a network-side device; where the related information of the first broadcast service includes at least one of: a service identification of the first broadcast service; a service index of the first broadcast service; and physical resource location information of the first broadcast service.

## Description

### CROSS REFERENCE OF RELATED APPLICATION

The present disclosure claims the priority of Chinese patent application No. 202210671380.6 filed on June 14, 2022, which is incorporated herein by reference in its entirety.

### TECHNICAL FIELD

The present disclosure relates to the technical field of communications, and in particular, to an information transmission method, a scheduling method, a terminal and a network-side device.

### BACKGROUND

As an important service type, the Multimedia Broadcast Multicast Service (MBMS) has been existed for a long time in 3^{rd} Generation Mobile Communication Technology (3G) and 4^{th} Generation Mobile Communication Technology (4G). In 5^{th} Generation Mobile Communication Technology (5G), it currently supports a unicast service. In view of the importance of the MBMS service to some vertical fields (e.g., Internet of Vehicles and public security), it need to support the MBMS (also called as Multicast/Broadcast Service (MBS) in 5G, which will be uniformly referred to as MBS when concerning 5G) service.

In many cases, the processing capability of a terminal is limited. If the terminal is receiving a unicast service 1 under a base station A (or a cell) of a current network while receiving a broadcast service 2 from another base station B (or another cell), the required processing capability (reception, demodulation and other corresponding processing of a signal) may exceed a capability range supported by the terminal. In 4G, a specific broadcast service type, i.e., a Receive Only Mode (ROM) broadcast service, is defined in a core network and a radio access network. The terminal only needs to report related information of the ROM service (e.g., the ROM service reports information thereof such as a frequency point, a bandwidth, a service identification or the like), and the terminal may determine whether a broadcast service is an ROM service by an identification thereof (e.g., Temporary Mobile Group Identification (TMGI)).

However, in 5G, an identification of a similar ROM service is not defined. Therefore, in a case that the terminal receives unicast and broadcast services simultaneously in the 5G system, if the terminal send a report by the reporting mode of the current 4G system to a network device, after a network device receives the content reported by the terminal, the network device cannot determine that the terminal is receiving a broadcast service while receiving a unicast service because the ROM service is not defined. Thus, when service scheduling is performed on the terminal, there is still a possibility that the capability of the terminal is exceeded.

### SUMMARY

The embodiments of the present disclosure aim to provide an information transmission method, a scheduling method, a terminal, and a network-side device, so as to solve a problem in the related art that service scheduling on the terminal by a network side is likely to exceed a capability of the terminal.

In order to solve the problem, the embodiments of the present disclosure provide an information transmission method, including:
determining, by a terminal, related information of a first broadcast service;
sending, by the terminal, the related information of the first broadcast service to a network-side device; where the related information of the first broadcast service includes at least one of:
a service identification of the first broadcast service;
a service index of the first broadcast service; or
physical resource location information of the first broadcast service.

The physical resource location information of the first broadcast service includes at least one of:
a frequency point of the first broadcast service;
a bandwidth of the first broadcast service; or
a subcarrier spacing of the first broadcast service.

Before the determining, by a terminal, related information of a first broadcast service, the method further includes:
acquiring, by the terminal, configuration information of broadcast service from a core network, where the configuration information of broadcast service includes service identification information of broadcast service and/or a corresponding relationship between the service identification of broadcast service and the service index of broadcast service; and
the determining, by a terminal, related information of a first broadcast service includes:
determining, by the terminal, the related information of the first broadcast service according to the configuration information of broadcast service and/or the received physical resource location information of the first broadcast service.

The first broadcast service includes a broadcast service that the terminal is interested or receiving.

The method further includes:
receiving, by the terminal, first indication information sent by the network-side device, where the first indication information includes the service identifications of one or more broadcast services; and
determining, by the terminal, a first broadcast service according to the first indication information; where the first broadcast service includes a broadcast service indicated by the first indication information among the broadcast services that the terminal is interested or receiving, or other broadcast service except that indicated by the first indication information among the broadcast services that the terminal is interested or receiving.

The method further includes:
determining, by the terminal, a broadcast service configuration of the network-side device, where the broadcast service configuration includes: related information of one or more broadcast services; and
determining, by the terminal, a first broadcast service according to the broadcast service configuration of the network-side device; where the first broadcast service includes broadcast services other than a broadcast service corresponding to the broadcast service configuration, among the broadcast services that the terminal is interested or receiving.

The method further includes:
determining, by the terminal, that the network-side device supports a capability of broadcast service according to a broadcast service indication or a broadcast service identification in a system message sent by the network-side device; and
the sending, by the terminal, the related information of the first broadcast service to a network-side device includes:
in a case where the network-side device supports the capability of the broadcasting service, sending, by the terminal, the related information of the first broadcasting service to the network-side device.

The sending, by the terminal, the related information of the first broadcast service to a network-side device includes:
sending, by the terminal, the related information of the first broadcast service through a Radio Resource Control (RRC) message or a Media Access Control Control Element (MAC CE).

The embodiments of the present disclosure further provide a scheduling method, including:
receiving, by a network-side device, related information of a first broadcast service sent by a terminal; where the related information of the first broadcast service includes at least one of:
a service identification of the first broadcast service;
a service index of the first broadcast service;
physical resource location information of the first broadcast service; or
scheduling, by the network-side device, a unicast service and a broadcast service of the terminal according to the related information of the first broadcast service.

The physical resource location information of the first broadcast service includes at least one of:
a frequency point of the first broadcast service;
a bandwidth of the first broadcast service; or
a subcarrier spacing of the first broadcast service.

The method further includes:
acquiring, by the network-side device, configuration information of broadcast service from a core network, where the configuration information of broadcast service includes: service identification information of broadcast service and/or a corresponding relationship between the service identification of broadcast service and a service index of broadcast service; and
the scheduling, by the network-side device, a unicast service and a broadcast service of the terminal according to the related information of the first broadcast service includes:
scheduling, by the network-side device, the unicast service and the broadcast service of the terminal according to the related information of the first broadcast service and the configuration information of broadcast service.

The method further includes:
scheduling, by the network-side device, the terminal to receive the unicast service and the broadcast service simultaneously by means of time division multiplexing or frequency division multiplexing, according to the related information of the first broadcast service and the configuration information of broadcast service.

The embodiments of the present disclosure further provide a terminal, including a memory, a transceiver, and a processor;
the memory is configured to store a computer program; the transceiver is configured to receive and transmit data under the control of the processor; and the processor is configured to read the computer program in the memory and perform operations of:
determining related information of a first broadcast service; and
sending the related information of the first broadcast service to a network-side device, where the related information of the first broadcast service includes at least one of:
a service identification of the first broadcast service;
a service index of the first broadcast service; or
physical resource location information of the first broadcast service.

The physical resource location information of the first broadcast service includes at least one of:
a frequency point of the first broadcast service;
a bandwidth of the first broadcast service; or
a subcarrier spacing of the first broadcast service.

The processor is further configured to read the computer program in the memory and perform operations of:
acquiring configuration information of broadcast service from a core network, where the configuration information of broadcast service includes service identification information of broadcast service and/or a corresponding relationship between the service identification of broadcast service and the service index of broadcast service; and
determining the related information of the first broadcast service according to the configuration information of broadcast service and/or the received physical resource location information of the first broadcast service.

The first broadcast service includes a broadcast service that the terminal is interested or receiving.

The processor is further configured to read the computer program in the memory and perform operations of:
receiving first indication information sent by the network-side device, where the first indication information includes the service identifications of one or more broadcast services; and
determining a first broadcast service according to the first indication information; where the first broadcast service includes a broadcast service indicated by the first indication information among the broadcast services that the terminal is interested or receiving, or other broadcast service except that indicated by the first indication information among the broadcast services that the terminal is interested or receiving.

The processor is further configured to read the computer program in the memory and perform operations of:
determining a broadcast service configuration of the network-side device, where the broadcast service configuration includes: related information of one or more broadcast services; and
determining a first broadcast service according to the broadcast service configuration of the network-side device; where the first broadcast service includes broadcast services other than a broadcast service corresponding to the broadcast service configuration, among the broadcast services that the terminal is interested or receiving.

The processor is further configured to read the computer program in the memory and perform operations of:
determining that the network-side device supports a capability of broadcast service according to a broadcast service indication or a broadcast service identification in a system message sent by the network-side device; and
in a case where the network-side device supports the capability of the broadcasting service, sending the related information of the first broadcasting service to the network-side device.

The processor is further configured to read the computer program in the memory and perform an operation of:
sending the related information of the first broadcast service through a Radio Resource Control (RRC) message or a Media Access Control Control Element (MAC CE).

The embodiments of the present disclosure further provide a terminal, including:
a first determination unit configured to determine related information of a first broadcast service; and
a first sending unit configured to send the related information of the first broadcast service to a network-side device; where the related information of the first broadcast service includes at least one of:
a service identification of the first broadcast service;
a service index of the first broadcast service; or
physical resource location information of the first broadcast service.

The embodiments of the present disclosure further provide a network-side device, including a memory, a transceiver, and a processor:
the memory is configured to store a computer program; the transceiver is configured to receive and transmit data under the control of the processor; and the processor is configured to read the computer program in the memory and perform operations of:
receiving related information of a first broadcast service sent by a terminal; where the related information of the first broadcast service includes at least one of:
a service identification of the first broadcast service;
a service index of the first broadcast service;
physical resource location information of the first broadcast service; or
scheduling a unicast service and a broadcast service of the terminal according to the related information of the first broadcast service.

The physical resource location information of the first broadcast service includes at least one of:
a frequency point of the first broadcast service;
a bandwidth of the first broadcast service; or
a subcarrier spacing of the first broadcast service.

The processor is further configured to read the computer program in the memory and perform operations of:
acquiring configuration information of broadcast service from a core network, where the configuration information of broadcast service includes: service identification information of broadcast service and/or a corresponding relationship between the service identification of broadcast service and a service index of broadcast service; and
scheduling the unicast service and the broadcast service of the terminal according to the related information of the first broadcast service and the configuration information of broadcast service.

The processor is further configured to read the computer program in the memory and perform an operation of:
scheduling the terminal to receive the unicast service and the broadcast service simultaneously by means of time division multiplexing or frequency division multiplexing, according to the related information of the first broadcast service and the configuration information of broadcast service.

The embodiments of the present disclosure further provide a network-side device, including:
a first receiving unit configured to receive related information of a first broadcast service sent by a terminal; where the related information of the first broadcast service includes at least one of:
a service identification of the first broadcast service;
a service index of the first broadcast service;
physical resource location information of the first broadcast service; or
a scheduling unit configured to schedule a unicast service and a broadcast service of the terminal according to the related information of the first broadcast service.

The embodiments of the present disclosure further provide a processor-readable storage medium which stores a computer program for causing the processor to perform the aforementioned information transmission method or the aforementioned scheduling method.

The embodiments of the present disclosure further provide a computer-readable storage medium, which stores a computer program for causing the processor to perform the aforementioned information transmission method or the aforementioned scheduling method.

The embodiments of the present disclosure further provide a chip product, which stores a computer program for causing the processor to perform the aforementioned information transmission method or the aforementioned scheduling method.

The embodiments of the present disclosure further provide a communication product, which stores a computer program for causing the processor to perform the aforementioned information transmission method or the aforementioned scheduling method.

The above technical solutions of the present disclosure have at least the following advantageous effects: in the information transmission method, the scheduling method, the terminal and the network-side device according to the embodiments of the present disclosure, after the terminal reports the related information of the first broadcast service to the network-side device, the network-side device makes a reference to the information reported by the terminal during the scheduling of the transmission of the unicast and multicast services, so that the terminal can receive the broadcast service and the unicast service simultaneously, thereby preventing the terminal from exceeding a processing capability thereof when receiving a plurality of services and being unable to receive part or all of the services.

### BRIEF DESCRIPTION OF THE DRAWINGS

FIG. 1 illustrates a block diagram of a radio communication system to which an embodiment of the present disclosure is applicable;
FIG. 2 illustrates a flowchart of steps of an information transmission method according to an embodiment of the present disclosure;
FIG. 3 illustrates a flowchart of steps of a scheduling method according to an embodiment of the present disclosure;
FIG. 4 illustrates a first structural diagram of a terminal according to an embodiment of the present disclosure;
FIG. 5 illustrates a second structural diagram of a terminal according to an embodiment of the present disclosure;
FIG. 6 illustrates a first structural diagram of a network-side device according to an embodiment of the present disclosure; and
FIG. 7 illustrates a second structural diagram of a network-side device according to an embodiment of the present disclosure.

### DETAILED DESCRIPTION

In order that the technical problem to be solved, the technical solutions and the advantages of the present disclosure are clearer, the detailed description will be made below with reference to the drawings and the specific embodiments.

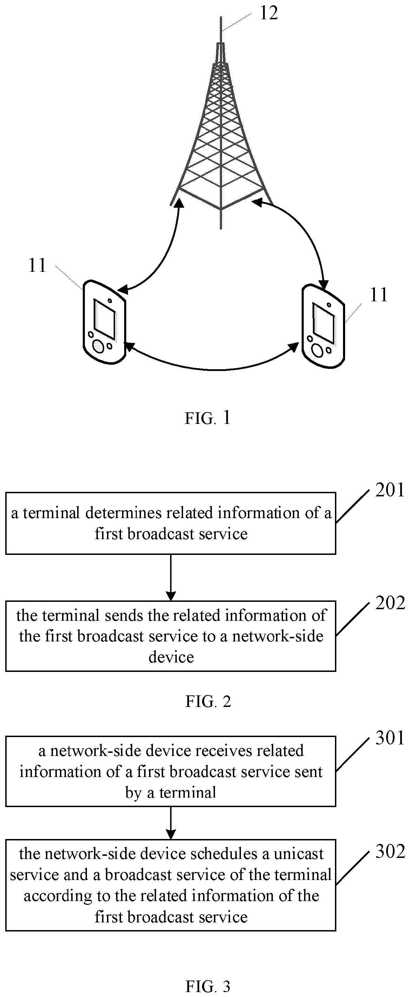

FIG. 1 illustrates a block diagram of a radio communication system to which an embodiment of the present disclosure is applicable. The radio communication system includes a terminal device 11 and a network-side device 12. the terminal device 11 may also be called as a terminal or User Equipment (UE). To be noted, the specific type of the terminal 11 is not limited in the embodiments of the present disclosure. The network-side device 12 may be a base station or a core network. To be noted, in the embodiments of the present disclosure, only the base station in an NR system is taken as an example, but the specific type of the base station is not limited.

The term "and/or" in the embodiments of the present disclosure describes an association relationship between associated objects, and indicates that there may be three relationships. For example, A and/or B may indicate that A exists alone, A and B exist simultaneously, and B exists alone. The character "/" generally indicates that the contextually associated objects are in an "or" relationship.

In the embodiments of the present disclosure, the term "a plurality of" refers to two or more, and other quantifiers are similar.

The technical solutions in the embodiments of the present disclosure will be clearly and completely described below with reference to the drawings involved in the embodiments of the present disclosure. Obviously, those described are only a part, rather than all, of the embodiments of the present disclosure. Based on the embodiments in the present disclosure, any other embodiment obtained by those of ordinary skill in the art without paying any creative effort should fall within the protection scope of the present disclosure.

The technical solutions according to the embodiments of the present disclosure are applicable to various systems, particularly the 5G system. For example, the applicable system may be a Global System of Mobile communication (GSM) system, a Code Division Multiple Access (CDMA) system, a Wideband Code Division Multiple Access (WCDMA) General Packet Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS) system, a worldwide interoperability for microwave access (WiMAX) system, a 5G New Radio (NR) system, or the like. These systems each includes a terminal device and a network device. The systems may further include a core network, such as an Evolved Packet System (EPS), a 5G System (5GS), etc.

The terminal device involved in the embodiments of the present disclosure may refer to a device which provides voice and/or data connectivity to a user, a handheld device having a radio connection function, or any other processing device connected to a radio modem. In different systems, the name of the terminal device may be varied. For example, in the 5G system, the terminal device may be called as User Equipment (UE). The radio terminal device may be communicated with one or more Core Networks (CNs) via a Radio Access Network (RAN). The radio terminal device may be a mobile terminal device, such as a mobile phone (also called as a "cellular" phone) or a computer which includes a mobile terminal device. For example, the mobile terminal device may be a portable, pocket-sized, hand-held, computer-embedded, or vehicle-mounted mobile device which exchanges speech and/or data with the radio access network. For example, the mobile terminal device may be a Personal Communication Service (PCS) phone, a cordless phone, a Session Initiated Protocol (SIP) phone, a Wireless Local Loop (WLL) station, a Personal Digital Assistant (PDA), etc. The radio terminal device may also be referred to as a system, a subscriber unit, a subscriber station, a mobile station, a mobile, a remote station, an access point, a remote terminal, an access terminal, a user terminal, a user agent, or a user device, which is not limited in the embodiments of the present disclosure.

The network-side device involved in the embodiments of the present disclosure may be a base station, which may include a plurality of cells serving the terminal. Depending on the application scenarios, the base station may also be referred to as an access point, may be a device in an access network to communicate with a radio terminal device through one or more sectors over an air interface, or may have other names. The network device may be used to exchange the received air frame with the Internet Protocol (IP) packet, and act as a router between the radio terminal device and the rest of the access network, where the rest of the access network may include an Internet Protocol (IP) communication network. The network device may also coordinate the attribute management of the air interface. For example, the network device involved in the embodiments of the present disclosure may be a network device (Base Transceiver Station, BTS) in a Global System for Mobile communications (GSM) or Code Division Multiple Access (CDMA), or a network device (NodeB) in Wide-band Code Division Multiple Access (WCDMA), or an evolved network device (evolutional Node B, eNB or e-NodeB) in a Long Term Evolution (LTE) system, or a 5G base station (gNB) in a 5G network architecture (next generation system), or a Home evolved Node B (HeNB), a relay node, a femtocell (femto), a picocell (pico), etc., which are not limited in the embodiments of the present disclosure. In some network architectures, the network device may include nodes of Centralized Units (CUs) and nodes of Distributed Units (DUs), and the CUs and the DUs may also be geographically separated.

One or more antennas may be used for Multi Input Multi Output (MIMO) transmission between the network-side device and the terminal device. The MIMO transmission may be a Single User MIMO (SU-MIMO) or a Multiple User MIMO (MU-MIMO). Depending on the form and the number of antenna combinations, the MIMO transmission may employ a 2Dimission MIMO (2D-MIMO) antenna, a 3Dimission MIMO (3D-MIMO) antenna, a Full Dimension MIMO (FD-MIMO) antenna, or a massive-MIMO antenna, and may also be a diversity transmission or a precoding transmission or a beamforming transmission, etc.

As illustrated in FIG. 2, an embodiment of the present disclosure provides an information transmission method, which includes:
Step 201: a terminal determines related information of a first broadcast service; and
Step 202: the terminal sends the related information of the first broadcast service to a network-side device, where the related information of the first broadcast service includes at least one of:
   a service identification of the first broadcast service;
   a service index of the first broadcast service; or
   physical resource location information of the first broadcast service.

As an optional embodiment, Step 202 includes:
The terminal sends the related information of the first broadcast service through a Radio Resource Control (RRC) message or a Media Access Control Control Element (MAC CE).

For example, the terminal may send, through an RRC message, the related information of the first broadcast service, such as UEAssistanceInformation or MB SInterestIndication.

In another embodiment of the present disclosure, the terminal may send the related information of the first broadcast service under the configuration (control) of a network. That is, the network may allow one or all of the terminals to send the related information of the first broadcast service through a dedicated RRC message or a system message (e.g., when a corresponding feedback trigger condition is satisfied).

In another embodiment of the present disclosure, the physical resource location information of the first broadcast service includes at least one of:
a frequency point of the first broadcast service;
a bandwidth of the first broadcast service; or
a subcarrier spacing of the first broadcast service.

The "physical resource location information of the first broadcast service" may also be understood as the physical resource location information of the first broadcast service received by the terminal.

In another embodiment of the present disclosure, before Step 201, the method further includes:
the terminal acquires configuration information of broadcast service from a core network, where the configuration information of broadcast service includes service identification information of broadcast service and/or a corresponding relationship between the service identification of broadcast service and the service index of broadcast service; accordingly, Step 201 includes:
the terminal determines the related information of the first broadcast service according to the configuration information of broadcast service and/or the received physical resource location information of the first broadcast service.

In another embodiment of the present disclosure, the service identification information of broadcast service may be a service identification of broadcast service and an available range of the service identification of broadcast service.

For example, the terminal acquires the configuration information of broadcast service from the core network, including the corresponding relationship between the service identification and the service index. When being interested or receiving the broadcast service, the terminal combines the configuration information acquired from the core network and the related configuration information of broadcast service (e.g., frequency point, bandwidth and subcarrier spacing) acquired from the base station to generate the related information of the first broadcast service to be reported to the network, including the service index, and one or more of the frequency point, the bandwidth and the subcarrier spacing used to receive the corresponding broadcast information, and then sends the information to the base station using RRC signaling or the MAC CE.

For another example, the terminal acquires the configuration information of broadcast service from the core network, including the service identification information. When being interested or receiving the broadcast service, the terminal combines the configuration information acquired from the core network and the related configuration information of broadcast service (e.g., frequency point, bandwidth and subcarrier spacing) acquired from the base station to generate the related information of the first broadcast service to be reported to the network, including the service identification, and one or more of the frequency point, the bandwidth and the subcarrier spacing used to receive the corresponding broadcast information, and then sends the information to the base station using RRC signaling or the MAC CE.

As an optional embodiment, the method further includes:
determining a first broadcast service; where the first broadcast service includes a broadcast service that the terminal is interested or receiving.

For example, the step in which the terminal reports the related information of broadcast service that the terminal is interested or receiving to the network includes receiving a frequency point, a bandwidth and a service identification of the corresponding broadcast service. That is, the terminal does not further distinguish the broadcast services, and reports the acquired related information of any broadcast service that the terminal is interested or receiving to the network.

As another optional embodiment, the terminal reports related information of a part of broadcast service that the terminal is interested or receiving (including receiving the frequency point, the bandwidth, the service identification, etc. of the corresponding broadcast information) to the network. The details are as follows:
Case 1: the method further includes:
the terminal receives first indication information sent by the network-side device, where the first indication information includes the service identifications of one or more broadcast services;
the terminal determines a first broadcast service according to the first indication information; where the first broadcast service includes a broadcast service indicated by the first indication information among the broadcast services that the terminal is interested or receiving, or other broadcast service except that indicated by the first indication information among the broadcast services that the terminal is interested or receiving.

In other words, based on the displayed indication, the terminal determines the broadcast services of which the related information is to be reported. For example, the terminal receives the first indication information of the base station A, and the first indication information includes the identifications of one or more broadcast services; the terminal only reports the related information of these broadcasting services, or only reports the related information of the broadcasting services other than these broadcasting services.

In case 1, the base station A excludes some services from the reporting by displaying the indication. For example, if the terminal is configured with a cell x by the base station A, and on the cell x, the base station A sends a unicast service 1 and a broadcast service 2 to the terminal. In this case, since the base station A can avoid the concurrency of the service 1 and the service 2 through a method such as scheduling, the base station does not require the terminal to report the related information of broadcast service (service 2). Since the base station A does not necessarily acquire the related information, the terminal needs to report other broadcast services. The base station A may send the first indication information to the terminal by means of the RRC message, the MAC CE, etc., where the first indication information may include the service 2, and also include the identifications of other broadcast services.

Case 2: the method further includes:
the terminal determines a broadcast service configuration of the network-side device, where the broadcast service configuration includes: related information of one or more broadcast services;
the terminal determines a first broadcast service according to the broadcast service configuration of the network-side device; where the first broadcast service includes broadcast services other than a broadcast service corresponding to the broadcast service configuration, among the broadcast services that the terminal is interested or receiving.

In other words, based on an implicit indication, the terminal determines the broadcast services of which the related information is to be reported. For example, the terminal acquires the identifications of one or more broadcast services from the broadcast service configurations in one or more cells of the base station A; and the terminal only reports the related information of the broadcasting services other than these broadcasting services.

The difference between the case 2 and the case 1 is that by reading a system message or a Multicast Control Channel (MCCH), etc. sent by the base station A instead of displaying signaling, it is possible to identify the broadcast services in the currently configured cell, and further determine not to report the related information of these broadcast services. For example, if the terminal has read the related configuration information of broadcast service 2 in the cell currently configured therefor by the base station A, and the network already acquires that the terminal is interested or receiving the broadcast service 2, the terminal does not need to give feedback on the related information of broadcast service 2.

Compared with the way of directly feeding back the related information of broadcast services that the terminal is interested or receiving, the reporting modes of the case 1 and the case 2 need to report less content, but corresponding configuration information is needed or the terminal is required to distinguish the corresponding broadcast services.

In still another optional embodiment of the present disclosure, the method further includes:
the terminal determines that the network-side device supports a capability of broadcast service according to a broadcast service indication or a broadcast service identification in a system message sent by the network-side device;
accordingly, Step 202 includes:
   in a case where the network-side device supports the capability of the broadcasting service, the terminal sends the related information of the first broadcasting service to the network-side device.

For example, the base station may further send a broadcast service indication or a broadcast service identification in the system message. The terminal determines whether to report based on the broadcast service indication in the system message, or whether the base station has sent the related broadcast service or provided the corresponding broadcast service configuration. For example, the terminal can report only when the base station is configured to allow the terminal to report.

To sum up, in the embodiments of the present disclosure, after the terminal reports the related information of the first broadcast service to the network-side device, the network-side device makes a reference to the information reported by the terminal during the scheduling of the transmission of the unicast and multicast services, so that the terminal can receive the broadcast service and the unicast service simultaneously, thereby preventing the terminal from exceeding a processing capability thereof when receiving a plurality of services and being unable to receive part or all of the services.

As illustrated in FIG. 3, an embodiment of the present disclosure further provides a scheduling method, which includes:
Step 301: a network-side device receives related information of a first broadcast service sent by a terminal; where the related information of the first broadcast service includes at least one of:
a service identification of the first broadcast service;
a service index of the first broadcast service;
physical resource location information of the first broadcast service; or
Step 302: the network-side device schedules a unicast service and a broadcast service of the terminal according to the related information of the first broadcast service, so that the terminal can receive the broadcast service and the unicast service simultaneously.

In another embodiment of the present disclosure, the terminal may receive the unicast service and the broadcast service by means of time division multiplexing or frequency division multiplexing, which is not specifically limited here.

As an optional embodiment, Step 302 includes:
the network-side device receives the related information of the first broadcast service sent by the terminal through a Radio Resource Control (RRC) message or a Medium Access Control Control Element (MAC CE).

For example, the terminal may send, through the RRC message, the related information of the first broadcast service, such as UEAssistanceInformation or MB SInterestIndication.

In another embodiment of the present disclosure, the terminal may send the related information of the first broadcast service under the configuration (control) of a network. That is, the network may allow one or all of the terminals to send the related information of the first broadcast service through a dedicated RRC message or a system message (e.g., when a corresponding feedback trigger condition is satisfied).

In another embodiment of the present disclosure, the physical resource location information of the first broadcast service includes at least one of:
a frequency point of the first broadcast service;
a bandwidth of the first broadcast service; or
a subcarrier spacing of the first broadcast service.

The "physical resource location information of the first broadcast service" may also be understood as the physical resource location information of the first broadcast service received by the terminal.

In at least one embodiment of the present disclosure, the method further includes:
the network-side device acquires configuration information of broadcast service from a core network, where the configuration information of broadcast service includes: service identification information of broadcast service and/or a corresponding relationship between the service identification of broadcast service and a service index of broadcast service; accordingly, step 302 includes:
the network-side device schedules the unicast service and the broadcast service of the terminal according to the related information of the first broadcast service and the configuration information of broadcast service.

In another embodiment of the present disclosure, the step in which the network-side device schedules the unicast service and the broadcast service of the terminal according to the related information of the first broadcast service and the configuration information of broadcast service includes:
the network-side device schedules the terminal to receive the unicast service and the broadcast service simultaneously by means of time division multiplexing or frequency division multiplexing, according to the related information of the first broadcast service and the configuration information of broadcast service.

In another embodiment of the present disclosure, the service identification information of broadcast service may be the service identification of broadcast service and an available range of the service identification of broadcast service.

For example, the base station receives the configuration information of broadcast service sent by the core network, including the corresponding relationship between the service identification and the service index. In addition, the base station receives the related information of the first broadcast service reported by the terminal, including the service index, and one or more of the frequency point, the bandwidth and the subcarrier spacing used to receive the corresponding broadcast information. The base station determines the service identification by combining the corresponding relationship between the service identification and the service index acquired from the core network and the service index reported by the terminal. Meanwhile, the base station determines a location of resources required by the broadcast information to be received by the terminal based on one or more of the frequency point, the bandwidth and the subcarrier spacing used in the broadcast information acquired from the terminal, and schedules on this basis, so that the terminal can receive the broadcast service and the unicast service simultaneously.

For another example, the base station receives the configuration information of broadcast service sent by the core network, including the service identification information. In addition, the base station receives the related information of the first broadcast service reported by the terminal, including the service identification, and one or more of the frequency point, the bandwidth and the subcarrier spacing used to receive the corresponding broadcast information. The base station determines the location of resources required by the broadcast information to be received by the terminal according to the service identification, and schedules on this basis, so that the terminal can receive the broadcast service and the unicast service simultaneously.

As an optional embodiment, the first broadcast service includes a broadcast service that the terminal is interested or receiving.

For example, the step in which the terminal reports the related information of broadcast service that the terminal is interested or receiving to the network includes receiving a frequency point, a bandwidth and a service identification of the corresponding broadcast service. That is, the terminal does not further distinguish the broadcast services, and reports the acquired related information of any broadcast service that the terminal is interested or receiving to the network.

As another optional embodiment, the terminal reports related information of a part of broadcast service that the terminal is interested or receiving (including receiving the frequency point, the bandwidth, the service identification, etc. of the corresponding broadcast information) to the network. The details are as follows:
Case 1: the method further includes:
the network-side device sends first indication information to the terminal, where the first indication information includes the service identifications of one or more broadcast services;
where the first indication information is used to indicate the first broadcast service to be reported by the terminal; where the first broadcast service includes a broadcast service indicated by the first indication information among the broadcast services that the terminal is interested or receiving, or other broadcast service except that indicated by the first indication information among the broadcast services that the terminal is interested or receiving.

In other words, based on the displayed indication, the terminal determines the broadcast services of which the related information is to be reported. For example, the terminal receives the first indication information of the base station A, and the first indication information includes the identifications of one or more broadcast services; the terminal only reports the related information of these broadcasting services, or only reports the related information of the broadcasting services other than these broadcasting services.

Case 2: the first broadcast service includes broadcast services other than a broadcast service corresponding to the broadcast service configuration of the network-side device, among the broadcast services that the terminal is interested or receiving.

In other words, based on an implicit indication, the terminal determines the broadcast services of which the related information is to be reported. For example, the terminal acquires the identifications of one or more broadcast services from the broadcast service configurations in one or more cells of the base station A; and the terminal only reports the related information of the broadcasting services other than these broadcasting services.

The difference between the case 2 and the case 1 is that by reading a system message or a Multicast Control Channel (MCCH), etc. sent by the base station A instead of displaying signaling, it is possible to identify the broadcast services in the currently configured cell, and further determine not to report the related information of these broadcast services. For example, if the terminal has read the related configuration information of broadcast service 2 in the cell currently configured therefor by the base station A, and the network already acquires that the terminal is interested or receiving the broadcast service 2, the terminal does not need to give feedback on the related information of broadcast service 2.

In another optional embodiment of the present disclosure, the method further includes:
the network-side device sends a system message, which includes a broadcast service indication or a broadcast service identification to indicate that the network-side device supports the capability of broadcast service. Accordingly, in a case where the network-side device supports the capability of the broadcasting service, the terminal sends the related information of the first broadcasting service to the network-side device.

For example, the base station may further send the broadcast service indication or the broadcast service identification in the system message. The terminal determines whether to report based on the broadcast service indication in the system message, or whether the base station has sent the related broadcast service or provided the corresponding broadcast service configuration. For example, the terminal can report only when the base station is configured to allow the terminal to report.

To sum up, in the embodiments of the present disclosure, after the terminal reports the related information of the first broadcast service to the network-side device, the network-side device makes a reference to the information reported by the terminal during the scheduling of the transmission of the unicast and multicast services, so that the terminal can receive the broadcast service and the unicast service simultaneously, thereby preventing the terminal from exceeding a processing capability thereof when receiving a plurality of services and being unable to receive part or all of the services.

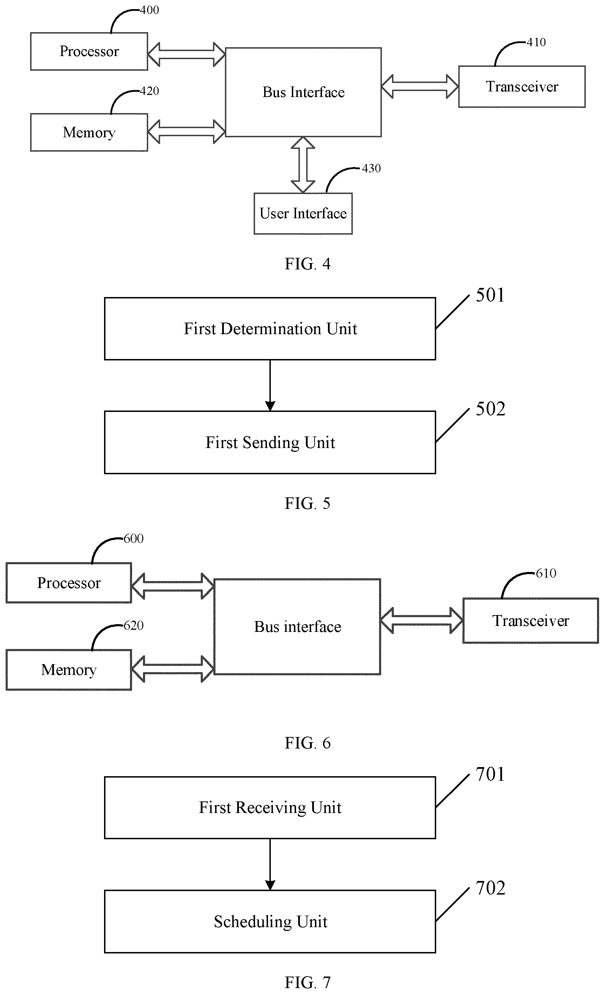

As illustrated in FIG. 4, an embodiment of the present disclosure further provides a terminal, including a memory 420, a transceiver 410, and a processor 400:
the memory 420 is configured to store a computer program; the transceiver 410 is configured to receive and transmit data under the control of the processor 400; and the processor 400 is configured to read the computer program in the memory 420 and perform operations of:
determining related information of a first broadcast service; and
sending the related information of the first broadcast service to a network-side device, where the related information of the first broadcast service includes at least one of:
   a service identification of the first broadcast service;
   a service index of the first broadcast service; or
   physical resource location information of the first broadcast service.

As an optional embodiment, the physical resource location information of the first broadcast service includes at least one of:
a frequency point of the first broadcast service;
a bandwidth of the first broadcast service; or
a subcarrier spacing of the first broadcast service.

As an optional embodiment, the processor is further configured to read the computer program in the memory and perform operations of:
acquiring configuration information of broadcast service from a core network, where the configuration information of broadcast service includes service identification information of broadcast service and/or a corresponding relationship between the service identification of broadcast service and the service index of broadcast service; and
determining the related information of the first broadcast service according to the configuration information of broadcast service and/or the received physical resource location information of the first broadcast service.

As an optional embodiment, the first broadcast service includes a broadcast service that the terminal is interested or receiving.

As an optional embodiment, the processor is further configured to read the computer program in the memory and perform operations of:
receiving first indication information sent by the network-side device, where the first indication information includes the service identifications of one or more broadcast services;
determining a first broadcast service according to the first indication information; where the first broadcast service includes a broadcast service indicated by the first indication information among the broadcast services that the terminal is interested or receiving, or other broadcast service except that indicated by the first indication information among the broadcast services that the terminal is interested or receiving.

As an optional embodiment, the processor is further configured to read the computer program in the memory and perform operations of:
determining a broadcast service configuration of the network-side device, where the broadcast service configuration includes: related information of one or more broadcast services; and
determining a first broadcast service according to the broadcast service configuration of the network-side device; where the first broadcast service includes broadcast services other than a broadcast service corresponding to the broadcast service configuration, among the broadcast services that the terminal is interested or receiving.

As an optional embodiment, the processor is further configured to read the computer program in the memory and perform operations of:
determining that the network-side device supports a capability of broadcast service according to a broadcast service indication or a broadcast service identification in a system message sent by the network-side device; and
in a case where the network-side device supports the capability of the broadcasting service, sending the related information of the first broadcasting service to the network-side device.

As an optional embodiment, the processor is further configured to read the computer program in the memory and perform an operation of:
sending the related information of the first broadcast service through a Radio Resource Control (RRC) message or a Medium Access Control Control Element (MAC CE).

In FIG. 4, a bus architecture may include any number of interconnected buses and bridges, and specifically various circuits of one or more processors represented by processor 400 and the memory represented by memory 420 are linked together. The bus architecture may also link together various other circuits, such as a peripheral device, a voltage stabilizer, a power management circuit, etc., which are well known in the art and not further described herein. The bus interface provides an interface. The transceiver 410 may be composed of a plurality of elements, i.e., including a transmitter and a receiver, so as to provide units for communication with various other devices over a transmission medium including a wireless channel, a wired channel, a fiber optic cable, or the like. For different user equipment, a user interface 430 may also be an interface capable of externally or internally connecting a desired device including, but not limited to, a keypad, a display, a speaker, a microphone, a joystick, or the like.

The processor 400 is responsible for managing a bus architecture and general processing, and the memory 420 may store data used by the processor 400 in performing operations.

Optionally, the processor 400 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor calls the computer program stored in the memory, and performs any of the methods in the embodiments of the present disclosure according to an obtained executable instruction. The processor and the memory may also be physically separated.

In the embodiments of the present disclosure, after the terminal reports the related information of the first broadcast service to the network-side device, the network-side device makes a reference to the information reported by the terminal during the scheduling of the transmission of the unicast and multicast services, so that the terminal can receive the broadcast service and the unicast service simultaneously, thereby preventing the terminal from exceeding a processing capability thereof when receiving a plurality of services and being unable to receive part or all of the services.

To be noted, the terminal according to the embodiments of the present disclosure is a terminal capable of performing the information transmission method. Thus, all of the embodiments of the information transmission method are applicable to the terminal and can achieve the same or similar advantageous effects.

As illustrated in FIG. 5, an embodiment of the present disclosure further provides a terminal, which includes:
a first determination unit 501 configured to determine related information of a first broadcast service; and
a first sending unit 502 configured to send the related information of the first broadcast service to a network-side device; where the related information of the first broadcast service includes at least one of:
   a service identification of the first broadcast service;
   a service index of the first broadcast service; or
   physical resource location information of the first broadcast service.

As an optional embodiment, the physical resource location information of the first broadcast service includes at least one of:
a frequency point of the first broadcast service;
a bandwidth of the first broadcast service; or
a subcarrier spacing of the first broadcast service.

As an optional embodiment, the terminal further includes:
a first acquisition unit configured to acquire configuration information of broadcast service from a core network, where the configuration information of broadcast service includes service identification information of broadcast service and/or a corresponding relationship between the service identification of broadcast service and the service index of broadcast service; and
the first determination unit is further configured to:
   determine the related information of the first broadcast service according to the configuration information of broadcast service and/or the received physical resource location information of the first broadcast service.

As an optional embodiment, the first broadcast service includes a broadcast service that the terminal is interested or receiving.

As an optional embodiment, the terminal further includes:
a second receiving unit configured to receive first indication information sent by the network-side device, where the first indication information includes the service identifications of one or more broadcast services; and
a third determination unit configured to determine a first broadcast service according to the first indication information; where the first broadcast service includes a broadcast service indicated by the first indication information among the broadcast services that the terminal is interested or receiving, or other broadcast service except that indicated by the first indication information among the broadcast services that the terminal is interested or receiving.

As an optional embodiment, the terminal further includes:
a fourth determination unit configured to determine a broadcast service configuration of the network-side device, where the broadcast service configuration includes: related information of one or more broadcast services; and
a fifth determination unit configured to determine a first broadcast service according to the broadcast service configuration of the network-side device; where the first broadcast service includes broadcast services other than a broadcast service corresponding to the broadcast service configuration, among the broadcast services that the terminal is interested or receiving.

As an optional embodiment, the terminal further includes:
a sixth determination unit configured to determine that the network-side device supports a capability of broadcast service according to the broadcast service indication or the broadcast service identification in the system message sent by the network-side device; and
the first sending unit is further configured to:
   in a case where the network-side device supports the capability of the broadcasting service, send the related information of the first broadcasting service to the network-side device.

As an optional embodiment, the first sending unit is further configured to:
send the related information of the first broadcast service through a Radio Resource Control (RRC) message or a Medium Access Control Control Element (MAC CE).

In the embodiments of the present disclosure, after the terminal reports the related information of the first broadcast service to the network-side device, the network-side device makes a reference to the information reported by the terminal during the scheduling of the transmission of the unicast and multicast services, so that the terminal can receive the broadcast service and the unicast service simultaneously, thereby preventing the terminal from exceeding a processing capability thereof when receiving a plurality of services and being unable to receive part or all of the services.

To be noted, the terminal according to the embodiments of the present disclosure is a terminal capable of performing the information transmission method. Thus, all of the embodiments of the information transmission method are applicable to the terminal and can achieve the same or similar advantageous effects.

As illustrated in FIG. 6, an embodiment of the present disclosure further provides a network-side device, which includes a memory 620, a transceiver 610, and a processor 600:
the memory 620 is configured to store a computer program; the transceiver 610 is configured to receive and transmit data under the control of the processor 600; and the processor 600 is configured to read the computer program in the memory 620 and perform operations of:
receiving related information of a first broadcast service sent by a terminal; where the related information of the first broadcast service includes at least one of:
a service identification of the first broadcast service;
a service index of the first broadcast service;
physical resource location information of the first broadcast service; or
scheduling a unicast service and a broadcast service of the terminal according to the related information of the first broadcast service.

As an optional embodiment, the physical resource location information of the first broadcast service includes at least one of:
a frequency point of the first broadcast service;
a bandwidth of the first broadcast service; or
a subcarrier spacing of the first broadcast service.

As an optional embodiment, the processor is further configured to read the computer program in the memory and perform operations of:
acquiring configuration information of broadcast service from a core network, where the configuration information of broadcast service includes service identification information of broadcast service and/or a corresponding relationship between the service identification of broadcast service and the service index of broadcast service; and
scheduling the unicast service and the broadcast service of the terminal according to the related information of the first broadcast service and the configuration information of broadcast service.

As an optional embodiment, the processor is further configured to read the computer program in the memory and perform an operation of:
scheduling the unicast service and the broadcast service of the terminal according to the related information of the first broadcast service and the configuration information of broadcast service.

As an optional embodiment, the first broadcast service includes: a broadcast service that the terminal is interested or receiving;
alternatively, the first broadcast service includes broadcast services other than broadcast services other than a broadcast service corresponding to the broadcast service configuration of the network-side device, among the broadcast services that the terminal is interested or receiving.

As an optional embodiment, the processor is further configured to read the computer program in the memory and perform an operation of:
sending first indication information to the terminal, where the first indication information includes the service identifications of one or more broadcast services;
where the first indication information is used to indicate the first broadcast service to be reported by the terminal; where the first broadcast service includes a broadcast service indicated by the first indication information among the broadcast services that the terminal is interested or receiving, or other broadcast service except that indicated by the first indication information among the broadcast services that the terminal is interested or receiving.

As an optional embodiment, the processor is further configured to read the computer program in the memory and perform an operation of:
sending a system message, which includes a broadcast service indication or a broadcast service identification to indicate that the network-side device supports the capability of broadcast service.

As an optional embodiment, the processor is further configured to read the computer program in the memory and perform an operation of:
receiving the related information of the first broadcast service sent by the terminal through a Radio Resource Control (RRC) message or a Medium Access Control Control Element (MAC CE).

In FIG. 6, a bus architecture may include any number of interconnected buses and bridges, and specifically various circuits of one or more processors represented by processor 600 and the memory represented by memory 620 are linked together. The bus architecture may also link together various other circuits, such as a peripheral device, a voltage stabilizer, a power management circuit, etc., which are well known in the art and not further described herein. The bus interface provides an interface. The transceiver 610 may be composed of a plurality of elements, i.e., including a transmitter and a receiver, so as to provide units for communication with various other devices over a transmission medium including a wireless channel, a wired channel, a fiber optic cable, or the like. The processor 600 is responsible for managing a bus architecture and general processing, and the memory 620 may store data used by the processor 600 in performing operations.

The processor 600 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

In the embodiments of the present disclosure, after the terminal reports the related information of the first broadcast service to the network-side device, the network-side device makes a reference to the information reported by the terminal during the scheduling of the transmission of the unicast and multicast services, so that the terminal can receive the broadcast service and the unicast service simultaneously, thereby preventing the terminal from exceeding a processing capability thereof when receiving a plurality of services and being unable to receive part or all of the services.

To be noted, the network-side device according to the embodiments of the present disclosure is a network-side device capable of performing the scheduling method. Thus, all of the embodiments of the scheduling method are applicable to the network-side device and can achieve the same or similar advantageous effects.

As illustrated in FIG. 7, an embodiment of the present disclosure further provides a network-side device, which includes:
a first receiving unit 701 configured to receive related information of a first broadcast service sent by a terminal; where the related information of the first broadcast service includes at least one of:
a service identification of the first broadcast service;
a service index of the first broadcast service;
physical resource location information of the first broadcast service; or
a scheduling unit 702 configured to schedule a unicast service and a broadcast service of the terminal according to the related information of the first broadcast service.

As an optional embodiment, the physical resource location information of the first broadcast service includes at least one of:
a frequency point of the first broadcast service;
a bandwidth of the first broadcast service; or
a subcarrier spacing of the first broadcast service.

As an optional embodiment, the network-side device further includes:
a second acquisition unit configured to acquire configuration information of broadcast service from a core network, where the configuration information of broadcast service includes service identification information of broadcast service and/or a corresponding relationship between the service identification of broadcast service and the service index of broadcast service; and
the scheduling unit is further configured to:
   schedule the unicast service and the broadcast service of the terminal according to the related information of the first broadcast service and the configuration information of broadcast service.

As an optional embodiment, the scheduling unit is further configured to:
schedule the unicast service and the broadcast service of the terminal according to the related information of the first broadcast service and the configuration information of broadcast service.

As an optional embodiment, the first broadcast service includes: a broadcast service that the terminal is interested or receiving;
alternatively, the first broadcast service includes broadcast services other than broadcast services other than a broadcast service corresponding to the broadcast service configuration of the network-side device, among the broadcast services that the terminal is interested or receiving.

As an optional embodiment, the network-side device further includes:
a second sending unit configured to send first indication information to the terminal, where the first indication information includes the service identifications of one or more broadcast services;
where the first indication information is used to indicate the first broadcast service to be reported by the terminal; where the first broadcast service includes a broadcast service indicated by the first indication information among the broadcast services that the terminal is interested or receiving, or other broadcast service except that indicated by the first indication information among the broadcast services that the terminal is interested or receiving.

As an optional embodiment, the network-side device further includes:
a third sending unit configured to send a system message, which includes a broadcast service indication or a broadcast service identification to indicate that the network-side device supports the capability of broadcast service.

As an optional embodiment, the first receiving unit is further configured to:
receiving the related information of the first broadcast service sent by the terminal through a Radio Resource Control (RRC) message or a Medium Access Control Control Element (MAC CE).

In the embodiments of the present disclosure, after the terminal reports the related information of the first broadcast service to the network-side device, the network-side device makes a reference to the information reported by the terminal during the scheduling of the transmission of the unicast and multicast services, so that the terminal can receive the broadcast service and the unicast service simultaneously, thereby preventing the terminal from exceeding a processing capability thereof when receiving a plurality of services and being unable to receive part or all of the services.

To be noted, the network-side device according to the embodiments of the present disclosure is a network-side device capable of performing the scheduling method. Thus, all of the embodiments of the scheduling method are applicable to the network-side device and can achieve the same or similar advantageous effects.

To be further noted, the division of the units in the embodiments of the present disclosure is schematic, which is only a division of logical functions, and there may be other division modes in practical implementations. In addition, various functional units in the embodiments of the present disclosure may be integrated into a processing unit, or physically existed separately, or two or more units may be integrated into one unit. The integrated unit may be implemented in the form of hardware, or a software functional unit.

The integrated unit, if implemented in the form of a software functional unit and sold or used as a separate product, may be stored in a processor-readable storage medium. Based on such understanding, the essence of a technical solution of the present disclosure or a part thereof that contributes to the related art or all or part of the technical solution may be embodied in the form of a software product. The computer software product is stored in a storage medium, and includes a plurality of instructions to cause a computer device (which may be a personal computer, a server, a network device, or the like) or a processor to perform all or part of the steps of the method described in various embodiments of the present disclosure. The storage medium includes various media capable of storing program codes, such as a U disk, a mobile hard disk, a Read-Only Memory (ROM), a Random Access Memory (RAM), a magnetic disk, or an optical disk.

The embodiments of the present disclosure further provide a processor-readable storage medium, which stores a computer program for causing the processor to perform various steps in the embodiments of the aforementioned information transmission method, or perform various steps in the embodiments of the aforementioned scheduling method; the processor-readable storage medium may be any available medium or data storage device accessible by the processor, including but not limited to a magnetic storage (e.g., floppy disk, hard disk, magnetic tape, Magneto-Optical (MO), etc.), an optical storage (e.g., Compact Disk (CD), Digital Versatile Disc (DVD), Blu-ray Disc (BD), High-Definition Versatile Disc (HVD), etc.), and a semiconductor memory (e.g., ROM, Erasable Programmable Read-Only Memory (EPROM), Electrically Erasable Programmable Read Only Memory (EEPROM), NAND FLASH, or Solid State Disk (SSD)), or the like.

To be noted, the division of the modules is only a division of logical functions, and in practical implementations, the modules may be entirely or partially integrated into a physical entity, or physically separated. In addition, these modules may all be implemented by calling software with a processing element; or all be implemented in the form of hardware; or some implemented by calling software with a processing element, and some implemented in the form of hardware. For example, the determination module may be a separately disposed processing element, or may be implemented by being integrated in a chip of the device. In addition, the module may also be stored in the form of program codes in a memory of the device, and a processing element of the device calls and executes the function of the determination module. The implementations of other modules are similar. In addition, all or part of these modules may be integrated together or independently implemented. The processing element here may be an integrated circuit with a signal processing capability. During implementations, the steps of the above method or the above modules may be completed by a hardware integrated logical circuit in the processor element or instructions in the form of software.

For example, various modules, units, sub-units, or sub-modules may be one or more integrated circuits configured to implement the above methods, such as one or more Application Specific Integrated Circuits (ASICs), or one or more microprocessors (digital signal processors, DSPs), or one or more Field Programmable Gate Arrays (FPGAs), etc. For another example, when one of the above modules is implemented by calling program codes with a processing element, the processing element may be a general-purpose processor, such as a Central Processing Unit (CPU) or any other processor capable of calling the program codes. For still another example, these modules may be integrated and implemented in the form of a System-On-a-Chip (SOC).

The terms such as "first" and "second" in the Specification and the claims of the present disclosure are used to distinguish similar objects and are not necessarily to describe a particular order or precedence. It should be understood that the data so used may be interchanged under appropriate circumstances, so that the embodiments of the present disclosure described here, for example, are implemented in an order in addition to those illustrated or described here. Further, the terms "comprise", "have" and any variations thereof, are intended to cover non-exclusive inclusions, e.g., a process, a method, a system, a product, or a device that comprises a series of steps or elements is not necessarily limited to the explicitly listed steps or units, but may include other steps or units not expressly listed or inherent to such process, method, product, or device. In addition, the term "and/or" used in the Specification and the claims means at least one of the connected objects. For example, A and/or B and/or C means that there are seven cases, i.e., A exists alone, B exists alone, C exists alone, both A and B exist, both B and C exist, both A and C exist, and A, B and C all exist. Similarly, "at least one of A and B" in the Specification and the claims should be understood as "A exists alone, B exists alone, or both A and B exist".

Those skilled in the art will appreciate that an embodiment of the present disclosure may be provided as a method, a system, or a computer program product. Accordingly, the present disclosure may take the form of entirely hardware embodiments, entirely software embodiments, or embodiments combining software and hardware aspects. Moreover, the present disclosure may take the form of a computer program product embodied on one or more computer-usable storage media (including but not limited to a disk storage, an optical storage, etc.) containing computer-usable program codes.

The present disclosure is described with reference to the flowcharts and/or the block diagrams of the method, the device (system), and the computer program product according to the embodiments of the present disclosure. It should be understood that each flow and/or block in a flowchart and/or a block diagram, and combinations of the flows and/or the blocks in the flowchart and/or the block diagram may be implemented by computer-executable instructions. The computer-executable instructions may be provided to a processor of a general-purpose computer, a special-purpose computer, an embedded processing machine or other programmable data processing device to produce a machine, such that the instructions executed by the processor of the computer or other programmable data processing device create means to realize function(s) specified in one or more flows of the flowchart and/or one or more blocks in the block diagram.

These processor-executable instructions may also be stored in a processor-readable memory capable of guiding the computer or other programmable data processing device to work in a particular way, such that the instructions stored in the processor-readable memory can produce manufacture articles including an instructing device which realizes function(s) specified in one or more flows in the flowchart and/or one or more blocks in the block diagram.

These processor-executable instructions may also be loaded onto a computer or other programmable data processing device, such that a series of operation steps can be performed on the computer or other programmable data processing device to produce a processing realized by the computer, thus the instructions executed on the computer or other programmable device provide step(s) for realizing function(s) specified in one or more flows in the flowchart and/or one or more blocks in the block diagram.

Obviously, those skilled in the art can make various modifications and variations to the present disclosure without departing from the spirit and the scope of the present disclosure. Thus, when these modifications and variations of the present disclosure fall within the scope of the claims of the present disclosure and the technical equivalents thereof, the present disclosure is also intended to include these modifications and variations.

## Claims

1. An information transmission method, comprising:
determining, by a terminal, related information of a first broadcast service; and
sending, by the terminal, the related information of the first broadcast service to a network-side device; wherein the related information of the first broadcast service comprises at least one of:
a service identification of the first broadcast service;
a service index of the first broadcast service; or
physical resource location information of the first broadcast service.

2. The method according to claim 1, wherein the physical resource location information of the first broadcast service comprises at least one of:
a frequency point of the first broadcast service;
a bandwidth of the first broadcast service; or
a subcarrier spacing of the first broadcast service.

3. The method according to claim 1, wherein before the determining, by a terminal, related information of a first broadcast service, the method further comprises:
acquiring, by the terminal, configuration information of broadcast service from a core network, wherein the configuration information of broadcast service comprises service identification information of broadcast service and/or a corresponding relationship between the service identification of broadcast service and the service index of broadcast service; and
the determining, by a terminal, related information of a first broadcast service comprises:
determining, by the terminal, the related information of the first broadcast service according to the configuration information of broadcast service and/or the received physical resource location information of the first broadcast service.

4. The method according to claim 1, further comprising:
receiving, by the terminal, first indication information sent by the network-side device, wherein the first indication information comprises the service identifications of one or more broadcast services; and
determining, by the terminal, a first broadcast service according to the first indication information; wherein the first broadcast service comprises a broadcast service indicated by the first indication information among the broadcast services that the terminal is interested or receiving, or other broadcast service except that indicated by the first indication information among the broadcast services that the terminal is interested or receiving.

5. The method according to claim 1, further comprising:
determining, by the terminal, a broadcast service configuration of the network-side device, wherein the broadcast service configuration comprises: related information of one or more broadcast services; and
determining, by the terminal, a first broadcast service according to the broadcast service configuration of the network-side device; wherein the first broadcast service comprises broadcast services other than a broadcast service corresponding to the broadcast service configuration, among the broadcast services that the terminal is interested or receiving.

6. The method according to claim 1, further comprising:
determining, by the terminal, that the network-side device supports a capability of broadcast service according to a broadcast service indication or a broadcast service identification in a system message sent by the network-side device; and
the sending, by the terminal, the related information of the first broadcast service to a network-side device comprises:
in a case where the network-side device supports the capability of the broadcasting service, sending, by the terminal, the related information of the first broadcasting service to the network-side device.

7. The method according to any of claims 1 to 6, wherein the sending, by the terminal, the related information of the first broadcast service to a network-side device comprises:
sending, by the terminal, the related information of the first broadcast service through a Radio Resource Control (RRC) message or a Media Access Control Control Element (MAC CE).

8. A scheduling method, comprising:
receiving, by a network-side device, related information of a first broadcast service sent by a terminal; wherein the related information of the first broadcast service comprises at least one of:
a service identification of the first broadcast service;
a service index of the first broadcast service;
physical resource location information of the first broadcast service; or
scheduling, by the network-side device, a unicast service and a broadcast service of the terminal according to the related information of the first broadcast service.

9. The method according to claim 8, wherein the physical resource location information of the first broadcast service comprises at least one of:
a frequency point of the first broadcast service;
a bandwidth of the first broadcast service; or
a subcarrier spacing of the first broadcast service.

10. The method according to claim 8, further comprising:
acquiring, by the network-side device, configuration information of broadcast service from a core network, wherein the configuration information of broadcast service comprises: service identification information of broadcast service and/or a corresponding relationship between the service identification of broadcast service and a service index of broadcast service; and
the scheduling, by the network-side device, a unicast service and a broadcast service of the terminal according to the related information of the first broadcast service comprises:
scheduling, by the network-side device, the unicast service and the broadcast service of the terminal according to the related information of the first broadcast service and the configuration information of broadcast service.

11. The method according to claim 10, wherein the scheduling, by the network-side device, the unicast service and the broadcast service of the terminal according to the related information of the first broadcast service and the configuration information of broadcast service comprises:
scheduling, by the network-side device, the terminal to receive the unicast service and the broadcast service simultaneously by means of time division multiplexing or frequency division multiplexing, according to the related information of the first broadcast service and the configuration information of broadcast service.

12. A terminal, comprising a memory, a transceiver, and a processor:
the memory is configured to store a computer program; the transceiver is configured to receive and transmit data under the control of the processor; and the processor is configured to read the computer program in the memory to perform:
determining related information of a first broadcast service; and
sending the related information of the first broadcast service to a network-side device, wherein the related information of the first broadcast service comprises at least one of:
a service identification of the first broadcast service;
a service index of the first broadcast service; or
physical resource location information of the first broadcast service.

13. The terminal according to claim 12, wherein the processor is further configured to read the computer program in the memory to perform:
acquiring configuration information of broadcast service from a core network, wherein the configuration information of broadcast service comprises service identification information of broadcast service and/or a corresponding relationship between the service identification of broadcast service and the service index of broadcast service; and
determining the related information of the first broadcast service according to the configuration information of broadcast service and/or the received physical resource location information of the first broadcast service.

14. The terminal according to claim 12, wherein the processor is further configured to read the computer program in the memory to perform:
receiving first indication information sent by the network-side device, wherein the first indication information comprises the service identifications of one or more broadcast services; and
determining a first broadcast service according to the first indication information; wherein the first broadcast service comprises a broadcast service indicated by the first indication information among the broadcast services that the terminal is interested or receiving, or other broadcast service except that indicated by the first indication information among the broadcast services that the terminal is interested or receiving.

15. The terminal according to claim 12, wherein the processor is further configured to read the computer program in the memory to perform:
determining that the network-side device supports a capability of broadcast service according to a broadcast service indication or a broadcast service identification in a system message sent by the network-side device; and
in a case where the network-side device supports the capability of the broadcasting service, sending the related information of the first broadcasting service to the network-side device.

16. A terminal, comprising:
a first determination unit, configured to determine related information of a first broadcast service; and
a first sending unit, configured to send the related information of the first broadcast service to a network-side device; wherein the related information of the first broadcast service comprises at least one of:
a service identification of the first broadcast service;
a service index of the first broadcast service; or
physical resource location information of the first broadcast service.

17. A network-side device, comprising a memory, a transceiver, and a processor:
the memory is configured to store a computer program; the transceiver is configured to receive and transmit data under the control of the processor; and the processor is configured to read the computer program in the memory to perform:
receiving related information of a first broadcast service sent by a terminal; wherein the related information of the first broadcast service comprises at least one of:
a service identification of the first broadcast service;
a service index of the first broadcast service;
physical resource location information of the first broadcast service; or
scheduling a unicast service and a broadcast service of the terminal according to the related information of the first broadcast service.

18. A network-side device, comprising:
a first receiving unit, configured to receive related information of a first broadcast service sent by a terminal; wherein the related information of the first broadcast service comprises at least one of:
a service identification of the first broadcast service;
a service index of the first broadcast service;
physical resource location information of the first broadcast service; or
a scheduling unit configured to schedule a unicast service and a broadcast service of the terminal according to the related information of the first broadcast service.

19. A processor-readable storage medium, storing a computer program, wherein the computer program is configured to enable the processor to perform the information transmission method according to any of claims 1 to 7 or the scheduling method according to any of claims 8 to 11.
